# EUROPÄISCHE PATENTANMELDUNG

(11) **EP 2 762 793 A1**
(43) Veröffentlichungstag der Anmeldung: **06.08.2014**
(21) Anmeldenummer: 13153579.1
(22) Anmeldetag: 01.02.2013
(51) Int. Cl.: F24F 6/14, F24F 11/00

(54) **Vorrichtung zur Regulierung der Luftfeuchtigkeit**

(71) Anmelder: Technische Hochshule Mittelhessen, 35390 Giessen (DE)
(72) Erfinder: Volker, Groß, 35453 Wettenberg (DE); Michael, Scholtes, 35390 Gießen (DE); Sus, Rainer, 35392 Gießen (DE)
(74) Vertreter: Stumpf, Peter

(57) **Zusammenfassung**

Die vorliegende Erfindung betrifft eine Vorrichtung zur Regulierung der Luftfeuchtigkeit, welche Wasserpartikel und Luft geregelt abgibt. Sie umfasst mindestens einen Behälter zur Aufnahme von Wasser mit einem steuerbaren Ventil, mindestens ein Verneblungselement und ein Gebläse, einen Luftkanal, ein Steuerelement und mindestens einen, bevorzugt mindestens zwei Temperatur/ Luftfeuchtesensoren zur Steuerung des Ventils und ist dadurch gekennzeichnet, dass sie ein steuerbares Heizelement zur Entfernung von Restwasser aus dem Luftkanal aufweist und der Behälter vom Verneblungselement wirksam separiert ist und/oder ein Separationsmittel besitzt. Damit wird das Gerät trocken gehalten und so eine Kontamination mit Mikroorganismen in der gesamten Vorrichtung minimiert.

## Beschreibung

Die vorliegende Erfindung betrifft eine Vorrichtung zur Regulierung der Luftfeuchtigkeit, welche Wasserpartikel und Luft geregelt abgibt.

Die Luftfeuchtigkeit - oder Luftfeuchte - bezeichnet den Anteil des Wasserdampfs in der Luft. Bei jeder Temperatur kann in einem bestimmten Luftvolumen nur eine Höchstmenge Wasserdampf enthalten sein. Das übliche Maß für die Luftfeuchtigkeit ist die relative Luftfeuchtigkeit, angegeben in Prozent (%). Sie bezeichnet das Verhältnis des momentanen Wasserdampfgehalts zum maximal möglichen Wasserdampfgehalt bei derselben Temperatur und demselben Druck.

Die Notwendigkeit zur Luftbefeuchtung besteht in vielen Bereichen. So liegt die relative Luftfeuchtigkeit in Wohn- oder Büroräumen insbesondere während der Heizperiode oftmals unterhalb des für Wohn- und Arbeitsräume empfohlenen Bereiches von 40 bis 60%.

Zur Anhebung der Luftfeuchtigkeit in Räumen sind zwei Methoden gebräuchlich.

Die erste Methode ist die Befeuchtung mittels durch Erhitzung gewonnenen Dampfes. Die hier verwendeten Vorrichtungen werden auch als Verdampfer bezeichnet. In Verdampfern wird das Wasser durch Zufuhr von Wärmeenergie zum Sieden gebracht. Der Dampf wird mit Hilfe eines Ventilators in die Raumluft eingeblasen. Durch die Erhitzung des Wassers auf den Siedepunkt kommt es zur Abtötung der enthaltenen Mikroorganismen. Dieser positive Effekt wird dadurch wieder beeinträchtigt, dass in den Ventilationseinrichtungen, Luftkanälen und Ausblasgittern Dampf auskondensiert. Das Kondensat kommt mit der Raumluft in Berührung und die Vermehrung von Mikroorganismen mit der Bildung von Keimnestern und Pilzbelägen in den Luftführungssystemen ist eine häufige Folge. Eine wirksame Reinigung mit Desinfektionsmitteln ist nur sehr begrenzt möglich, da die Innenflächen luftführender Kanäle kaum zugänglich sind. Ein weiteres Problem ist, dass es hier beim Einsatz von normalem, d.h. nicht entmineralisiertem Wasser, zu Kalkablagerungen kommt.

Die zweite Methode der Luftbefeuchtung ist die Zerstäubung von Wasser in kleine Wasserpartikel. Die hier verwendeten Vorrichtungen werden auch als Vernebler bezeichnet.

Die Wasserpartikel werden mit einem Luftstrom in die Raumluft getragen. Da hier das Wasser nicht erhitzt wird, werden Mikroorganismen nicht abgetötet. Diese Methode ist jedoch energetisch günstiger.

Bei allen Luftbefeuchtungssystemen ist die Kontamination der Raumluft mit Mikroorganismen und/oder Kalkablagerung ein relevantes Problem, für das im Stand der Technik verschiedene Lösungsmöglichkeiten entwickelt wurden.

In DE 38 40 922 A1 wird ein Luftbefeuchter vorgeschlagen welcher Netzwasser verwendet, dieses aufwendig entmineralisiert und mittels Membrantrennverfahren entkeimt und anschließend mittels Druckluft zerstäubt. Dieses Verfahren weist zwar eine geringe Zahl von Mikroorganismen im zerstäubten Wasser auf, ist aber aufwändig, da es immer an das Wassernetz angeschlossen sein muss. Dies schließt eine Nutzung in Räumen ohne Wasseranschluss wie z.B. Schlafräumen aus. Die Steuerung erfolgt hier über einen Feuchtemesser an der Austrittsstelle der befeuchteten Luft, was nachteilig ist da diese Stelle nicht repräsentativ für die Raumfeuchte ist.

In DE 102006035214A1 wird ein Luftbefeuchter vorgeschlagen der einen internen Wasserbehälter umfasst und somit vom Netzwasser unabhängig ist. Hier wird das Wasser zur Entkeimung und Entmineralisierung in ein zweites Becken geleitet. Da es sich nicht um ein geschlossenes System handelt, muss dieses Gerät aber ständig in Betrieb bleiben um eine Kontamination des Wassers mit Mikroorganismen in diesem Behälter zu vermeiden. Des Weiteren läuft hier die Zerstäubung ohne Messung der Luftfeuchte, so dass es nicht zu einer kontrollierten und genauen Regulierung der Luftfeuchtigkeit geeignet ist.

Aufgabe der vorliegenden Erfindung ist es, eine Vorrichtung zur Regulierung der Luftfeuchtigkeit bereitzustellen, welche minimale Kontamination der Raumluft mit Mikroorganismen verursacht und dabei mobil ist sowie einen einfachen und wartungsarmen Aufbau aufweist.

Diese Aufgabe wird durch eine erfindungsgemäße Vorrichtung zur Regulierung der Luftfeuchtigkeit gemäß Anspruch 1 gelöst.

Die Vorrichtung zur Regulierung der Luftfeuchtigkeit, im folgenden Luftbefeuchter genannt, umfasst einen wechselbaren Wasserbehälter. Dieser Behälter ist durch ein Ventil verschlossen. Dieses Ventil wird durch ein Steuerungselement gesteuert. Vorzugsweise handelt es sich um ein Magnetventil, da sich so die austretende Wassermenge sehr genau dosieren lässt, aber auch andere Bauformen sind möglich. Es dient dem kontrollieren Wasseraustritt.

Die Steuerung des Ventils geschieht automatisch mittels eines Steuerelements. Die automatische Steuerung erfolgt dabei durch den Abgleich der im Steuerungselement festgelegten Parametern mit den von mindestens einen bevorzugt frei positionierbaren Sensor bereitgestellten Daten zur Temperatur und Feuchte. Die Datenübertragung geschieht dabei vorzugsweise über Funk. Die freie Positionierung der/des Sensoren/Sensors ermöglicht eine genaue Regulierung der Luftfeuchte. Auch eine Steuerung über eine Zeitschaltung oder eine Kombination verschiedener Steuerungsmethoden ist möglich. Der Wasserbehälter und sein Ventil sind so konzipiert, dass kein Wasser offen im Luftkanal steht.

Das zu vernebelnde Wasser gelangt aus dem Behälter durch das Ventil zu einem Verneblungselement (beispielsweise ein Aerosolgenerator), wo es vernebelt wird. Mit Hilfe des Steuerungselements wird die Wasserpartikelgröße der im Verneblungselement erzeugten Partikel im Bereich von 0,1 bis 10 µm eingestellt. Das Verneblungselement wird dabei von Luft umströmt. Ein Gebläse sorgt für einen adäquaten und regelbaren Volumenstrom durch den Luftbefeuchter. Hierbei sind Verneblungselement und Ventil so angeordnet, dass keine Wasserpartikel vom Verneblungselement an das Ventil gelangen.

Dies geschieht entweder dadurch, dass sie wirksam separiert sind (der Abstand ist hierbei mindestens 2 cm und bevorzugt mindestens 4 cm) und/oder durch ein Separationsmittel wie beispielsweise eine Blende oder ein Gitter.

Der Luftstrom transportiert die Wasserpartikel in den zu befeuchtenden Raum, wodurch die Luftfeuchte erhöht wird. Der Luftbefeuchter besitzt weiterhin mindestens ein Heizelement, um so bei geschlossenem Ventil verbliebenes Restwasser aus dem Luftkanal zu entfernen. Das Heizelement ist dabei so positioniert, dass es geeignet ist, die an den inneren Oberflächen der Vorrichtung befindlichen Wassertröpfchen zu beseitigen. Damit wird die Vorrichtung trocken gehalten und so eine Kontamination mit Mikroorganismen in der gesamten Vorrichtung minimiert.

Das Wasser im Behälter ist bevorzugt entmineralisiertes Wasser, welches vor dem Einsatz im Luftbefeuchter von Mikroorganismen befreit wurde. Der Behälter ist wechselbar und dicht verschließbar. Es ist somit möglich das Entmineralisieren und das Befreien von Mikroorganismen getrennt vom übrigen Luftbefeuchter durchzuführen. Es ist nicht notwendig dass dies am Aufstellungsort der Vorrichtung geschieht.

In einer weiteren Ausführungsform weist der Luftbefeuchter eine Ansaugöffnung auf. Durch diese wird mit einem Gebläse Luft angesaugt. Diese wird dann durch die Vorrichtung geleitet. Außerdem weist er bevorzugt einen Luftfilter auf, um so die Luft von Staub und Mikroorganismen zu reinigen. Bauartbedingt benötigt der Luftbefeuchter keine weiteren internen Filter, was seine Wartung erleichtert.

In einer weiteren Ausführungsform weist der Luftbefeuchter wenigstens eine steuerbare Verdampfungsvorrichtung im Sinne eines Vapors oder eine weitere Verneblungsvorrichtung auf, welche weitere Substanzen außer Wasser (z.B. ätherische Öle) in den Luftstrom abgeben kann. Dies erhöht das Wohlbefinden des Anwenders.

In einer weiteren Ausführungsform weist der Wasserbehälter des Luftbefeuchters eine elektronisch durch das Steuerelement auswertbare Kennung auf. Dies ist vorzugsweise eine RFID Kennung. Dies ermöglicht beispielsweise die Erkennung ob der Wasserbehälter gewechselt werden muss, da seine Haltbarkeit abgelaufen ist.

In einer weiteren Ausführungsform weist der Wasserbehälter des Luftbefeuchters einen Sensor zur Überwachung von Parametern des enthaltenen Wassers innerhalb des Behälters auf. Diese Parameter sind insbesondere pH-Wert, elektrische Leitfähigkeit, Temperatur und/oder Transparenz (Durchsichtigkeit). Hiermit wird insbesondere überwacht, ob die Belastung des Wassers im Behälter mit Mikroorganismen einen kritischen Grenzwert nicht überschreitet. Der Sensor leitet diese Informationen an das Steuerelement weiter, welches den Anwender informiert, sollte der vorher festgelegte Normalbereich verlassen werden.

Die erfindungsgemäße Ausführung ist nachfolgend erläutert, wobei die Erfindung alle nachfolgend aufgeführten bevorzugten Ausführungsformen einzeln und in Kombination umfasst.

Bevorzugte Ausführungsbeispiele der vorliegenden Erfindung werden nun anhand der beigefügten Zeichnungen näher erläutert. Dabei zeigt:

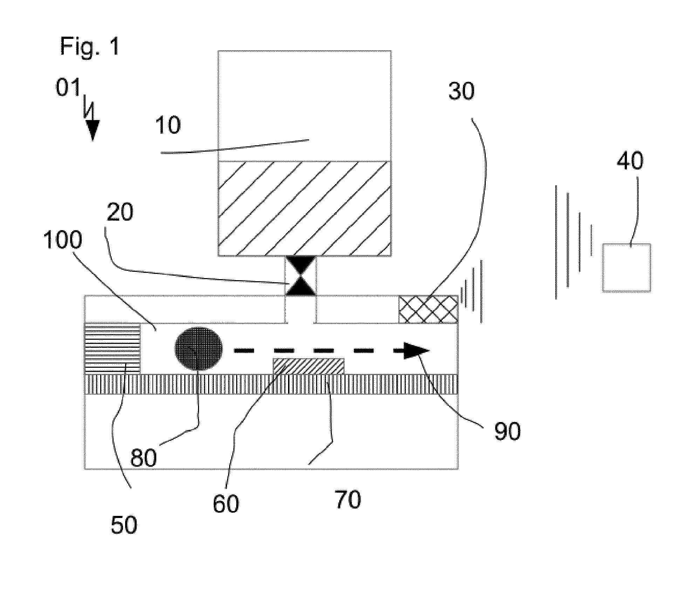

**Fig. 1****.** Den erfindungsgemäßen Luftbefeuchter im Querschnitt.

In der nachfolgenden Beschreibung sind weitere Aspekte und Ausführungsbeispiele der vorliegenden Erfindung offenbart. Zudem wird auf die beigefügten Zeichnungen, die einen Teil derselben bilden, und in denen mittels Veranschaulichung ein oder mehrere Beispiele, bei denen die Erfindung praktiziert werden kann, gezeigt sind, Bezug genommen. Diese Offenbarung der Erfindung soll die Merkmale oder Hauptelemente der Erfindung nicht auf ein spezifisches Ausführungsbeispiel beschränken. Vielmehr können die verschiedenen Elemente, Aspekte und Merkmale, die in den Ausführungsbeispielen offenbart sind, durch einen Fachmann auf dem Gebiet auf verschiedene Arten kombiniert werden, um einen oder mehrere Vorteile der vorliegenden Erfindung zu erzielen. Es sei darauf hingewiesen, dass andere Ausführungsbeispiele verwendet werden können, und strukturelle oder logische Veränderungen vorgenommen werden können, ohne von dem Schutzbereich der vorliegenden Erfindung abzuweichen. Gleiche Bezugszeichen bezeichnen entsprechende ähnliche Teile.

**Fig. 1** zeigt eine Bauform des Luftbefeuchters **(01).** Hierbei befindet sich ein wassergefüllter Behälter **(10)** oberhalb des durch ein Gebläse **(80)** hervorgerufenen Luftstroms **(90)** der den Luftkanal **(100)** des Luftbefeuchters durchzieht. Der Behälter **(10)** ist dabei durch ein steuerbares Ventil **(20)** verschlossen. Dieses befindet sich oberhalb des steuerbaren Verneblers **(70).** Die durch den Sensor **(40)** gemessenen Werte für Luftfeucht-und/oder Temperatur leitet dieser an das Steuerelement **(30).** Dieses vergleicht diese mit voreingestellten Variablen und öffnet gegebenenfalls das Ventil **(20).** Dadurch fällt Wasser zum Vernebler **(70)** und wird in 0,1 bis 10 µm große Wasserpartikel vernebelt. Das Ventil **(20)** befindet sich dabei mit 2 cm bis 10 cm, bevorzugt 5 bis 10 cm so weit vom Vernebler entfernt, sodass es nicht von Wasserpartikeln erreicht wird. Nachdem die voreingestellte Luftfeuchte erreicht wird, schließt das Steuerelement **(30)** das Ventil **(20).** Zusätzlich wird das Heizelement **(70)** durch das Steuerelement **(30)** aktiviert, um das Restwasser im Luftkanal **(100)** über den Luftstrom **(90)** zu entfernen. Zusätzlich besitzt der Luftbefeuchter **(01)** noch einen Luftfilter **(50)** an der Ansaugöffnung. Damit wird die Luft von Mikroorganismen und Staub befreit.

### Bezugszeichen

- 01: Luftbefeuchter
- 10: Wasserbehälter
- 20: Ventil
- 30: Steuerungselement
- 40: Sensor (Temperatur /Feuchte)
- 50: Filter
- 60: Vernebler
- 70: Heizung
- 80: Gebläse
- 90: Luftstrom
- 100: Luftkanal

## Patentansprüche

1. Vorrichtung zur Regulierung der Luftfeuchtigkeit umfassend mindestens einen Behälter zur Aufnahme von Wasser mit einem steuerbaren Ventil, mindestens ein Verneblungselement und ein Gebläse, einen Luftkanal, ein Steuerelement und mindestens einen, bevorzugt mindestens zwei Temperatur/ Luftfeuchtesensoren zur Steuerung des Ventils, **gekennzeichnet dadurch, dass** sie ein steuerbares Heizelement zur Entfernung von Restwasser aus dem Luftkanal aufweist und der Behälter vom Verneblungselement wirksam durch einen Abstand von mindestens 2 cm, bevorzugt mindestens 4 cm, separiert ist, und/oder ein Separationsmittel aufweist.

2. Vorrichtung zur Regulierung der Luftfeuchtigkeit gemäß Anspruch 1, **gekennzeichnet dadurch, dass** das Separationsmittel als Blende oder als Gitter ausgeführt ist.

3. Vorrichtung zur Regulierung der Luftfeuchtigkeit gemäß Anspruch 1 oder 2, **gekennzeichnet dadurch, dass** der Luftkanal wenigstens eine steuerbare Verdampfungsvorrichtung oder Verneblungsvorrichtung für Substanzen außer Wasser aufweist.

4. Vorrichtung zur Regulierung der Luftfeuchtigkeit einem der vorigen Ansprüche, **gekennzeichnet dadurch, dass** der Behälter zur Aufnahme von Wasser eine elektronisch durch das Steuerelement auswertbare Kennung aufweist.

5. Vorrichtung zur Regulierung der Luftfeuchtigkeit, gemäß einem der vorigen Ansprüche, **gekennzeichnet dadurch, dass** der Behälter zur Aufnahme von Wasser einen Sensor zur Überwachung des Wassers innerhalb des Behälters aufweist.
